# EUROPEAN PATENT SPECIFICATION

(11) **EP 1 994 302 B1**
(45) Date of publication and mention of the grant of the patent: **06.04.2011**
(21) Application number: 07709500.8
(22) Date of filing: 23.02.2007
(51) Int. Cl.: F16D 65/12, F16D 65/847

(54) **BRAKE DISC AND CONNECTION PART**
BREMSSCHEIBE UND VERBINDUNGSTEIL
DISQUE DE FREIN ET PIÈCE DE LIAISON

(30) Priority: 01.03.2006 SE 0600442
(43) Date of publication of application: 26.11.2008
(73) Proprietor: Scania CV AB (publ), 151 87 Södertälje (SE)
(72) Inventor: ILG, Torvald, S-122 48 Enskede (SE); FREDRIKSSON, Rolf, S-152 43 Södertälje (SE)
(86) International application number: PCT/SE2007/050109
(87) International publication number: WO 2007/120105

(56) References cited:
- EP-A- 0 726 406
- EP-A1- 0 077 137
- EP-A2- 0 074 624
- WO-A-2005/054704
- WO-A1-01/29442
- DE-A1- 2 539 361
- US-A- 5 107 966
- US-A- 5 109 960
- US-A1- 2005 126 870

## Description

### TECHNICAL FIELD

The invention relates to a brake disc comprising two brake rings arranged at a mutual distance and a central aperture adapted to enabling the disc to move on, and rotate jointly with, an appropriately designed shaft. The invention also relates to a connecting element for such a brake disc.

### BACKGROUND

The symmetrical shape of such a floatingly supported brake disc makes it possible for the latter to remain planar under thermal load, unlike the type of brake discs which have a central shell-like retainer protruding from one side of the brake disc. By splined connection, the floating bearing also allows the disc to expand unhindered in the radial direction on the shaft. A remaining problem, however, is that the material of the disc, usually grey iron, does not always scope with the large stresses in the splined connection.

In US-A-5 107 966, defining the preamble of claim 1, it is known that the shell-like retainer of the brake disc of the above mentioned type, is made of stronger material than the brake rings and is caste integral with the brake rings.

### SUMMARY OF THE INVENTION

An object of the invention is to further develop prior art and to provide a brake disc of the kind indicated in the introduction which has improved strength characteristics.

This is achieved by the features indicated in the claims set out below.

According to one version of the invention, the connecting element has apertures running through it and which communicate with a clear space between the brake rings.

*Thus, a brake disc is provided that not only uses the known advantages of combined materials, but also has the advantage of an improved cooling by permitting entrance of cooled air to the brake disc from its inner side. Thus, it is prevented that the disc is heated to such an extent that the strength is jeopardized.*

The connecting element may in a conventional manner be made of nodular iron whereas the remaining element may with advantage be made of grey iron.

According to one embodiment, the connecting element has protrusions pointing radially outwards which are incorporated by casting into the brake element. The connecting element can thus be reliably anchored in the brake element during the casting process.

Other features and advantages of the invention are indicated by the detailed description and claims set out below.

### BRIEF DESCRIPTION OF THE DRAWLING

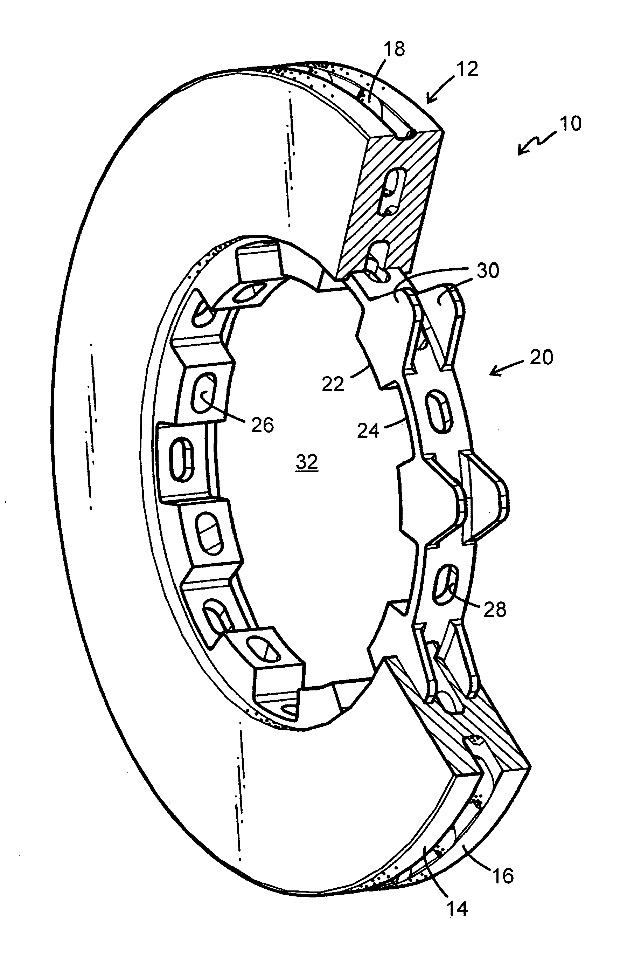

The single drawing depicts a partly cut away oblique side view of a brake disc according to the invention.

### DETAILED DESCRIPTION OF AN EMBODIMENT

The brake disc 10 depicted in the drawing comprises in functional terms a brake element 12 and a connecting element 20. The brake element 12 is intended in a conventional manner to have its planar outsides placed in engagement with undepicted brake linings of a likewise undepicted brake mechanism, and the connecting element 20 is intended to be connected to an undepicted rotatable shaft in order to connect the brake disc 10 to the shaft for their joint rotation.

The brake element 12, which is made of relatively more brittle material, comprises in the example depicted two brake rings 14, 16 connected together at mutual spacing by a plurality of transverse connections 18 which are incorporated by casting into, and are made of the same material as, the rings. The intermediate spaces thus created allow ingress of air which cools the brake rings 14, 16.

The connecting element 20 is made of relatively stronger material, e.g. nodular iron, and is made separately, e.g. by casting. The connecting element 20 is anchored in the brake element 12 by being partly incorporated by casting into the brake element 12 when the latter is cast in the less strong material, e.g. grey iron. The resulting brake disc 10 thus has only a radial inner connecting portion of the connecting element 20 exposed on its inside which delineates a central aperture 32. The connecting portion comprises splines which take the form of ridges 22 and grooves 24 and are intended to engage with the undepicted shaft provided with complementary splines. The brake disc 10 is fixed on the shaft in a conventional manner by axially flexible clamping means (not depicted) capable of accommodating axial dimensional changes due to thermal deformation of the brake disc 10.

The connecting element 20 has also a radially outer anchoring portion, i.e. the portion incorporated by casting into the brake element 12. For reliable anchoring in the brake element, the anchoring portion has a pair of protrusions or flanges 30 which point radially outwards and by their relatively large surface area interlock with the surrounding material of the brake element 12, more specifically with an axially central region of each brake ring 14, 16.

The connecting element 20 further has running through it a plurality of apertures 26, 28 which communicate with the intermediate space between the brake rings 14, 16 to allow ingress of cooling air to the brake disc 10 from the inside thereof.

The inherent elasticity of the relatively thin-walled connecting element 20 also enables it to hold the brake element 12 together if the latter breaks or merely cracks because of large stresses. The risk of parts of a rotating brake disc being ejected with great force is thus minimised.

The above detailed description is primarily intended to facilitate comprehension and no limitations of the invention are to be interpreted therefrom. The modifications which will be obvious to one skilled in the art who examines the description may be implemented without deviating from the concept of the invention or the scope of the claims set out below.

## Claims

1. A brake disc (10) comprising two brake rings (14, 16) arranged at a mutual distance and a central aperture (32) adapted to enabling the disc to move on, and rotate jointly with, an appropriately designed shaft, the central aperture (32) being delineated by a connecting element (20) which is partly incorporated by casting into the brake rings (14, 16) and is made of stronger material than the brake rings (14, 16), and **characterised in that** the connecting element (20) has apertures (26, 28) running through it which communicate with a clear space between the brake rings (14, 16).

2. A brake disc according to claim 1, whereby the brake element (12) is made of grey iron and the connecting element (20) is made of nodular iron.

3. A brake disc according to claim 1 or 2, whereby the connecting element (20) comprises protrusions (30) pointing radially outwards which are incorporated by casting into the brake rings (14, 16).

4. A brake disc according to any one of the foregoing claims, whereby the central aperture is delineated by splines in the form of ridges (22) and grooves (24).

## Patentansprüche

1. Bremsscheibe (10) umfassend zwei Bremsringe (14, 16), die mit einem Abstand zueinander angeordnet sind, und einer in der Mitte gelegenen Öffnung (32), die dazu ausgebildet ist, eine Scheibenbewegung zu ermöglichen und sich gemeinsam mit einer entsprechend ausgebildeten Welle zu drehen, wobei die in der Mitte gelegene Öffnung (32) durch ein Verbindungselement (20) begrenzt ist, welches teilweise durch Einformen in den Bremsringen (14, 16) ausgebildet ist und aus einem härteren Material als die Bremsringe (14, 16) besteht, und **dadurch gekennzeichnet ist, dass** das Verbindungselement (20) Öffnungen (26, 28) aufweist, die durch dieses verlaufen und die mit einem Zwischenraum zwischen den Bremsringen (14, 16) kommunizieren.

2. Bremsscheibe nach Anspruch 1, wobei das Bremselement (12) aus Grauguss hergestellt ist und das Verbindungselement (20) aus Sphäroguss hergestellt ist.

3. Bremsscheibe nach Anspruch 1 oder 2, wobei das Verbindungselement (20) Vorsprünge (30) aufweist, die radial nach außen weisen und welche durch Einformen in den Bremsringen (14, 16) enthalten sind.

4. Bremsscheibe nach einem der vorhergehenden Ansprüche, wobei die in der Mitte gelegene Öffnung durch eine Vielkeilverzahnung in der Form von Erhebungen (22) und Fugen (24) begrenzt ist.

## Revendications

1. Disque de frein (10) comprenant deux anneaux de freinage (14, 16) agencés à distance l'un de l'autre et une ouverture centrale (32) adaptée pour permettre au disque de se déplacer sur un arbre convenablement conçu et de tourner conjointement avec ce dernier, l'ouverture centrale (32) étant définie par un élément de liaison (20) qui est partiellement incorporé dans les anneaux de freinage (14, 16) par coulée et qui est fait d'une matière plus solide que celle des anneaux de freinage (14, 16), **caractérisé en ce que** l'élément de liaison (20) présente des trous (26, 28) qui le traversent et qui communiquent avec un espace libre compris entre les anneaux de freinage (14, 16).

2. Disque de frein selon la revendication 1, dans lequel l'élément de frein (12) est fait de fonte grise et l'élément de liaison (22) est fait de fonte ductile (« nodular iron »).

3. Disque de frein selon la revendication 1 ou 2, dans lequel l'élément de liaison (20) présente des parties saillantes (30) qui pointent radialement vers l'extérieur et qui sont incorporées dans les anneaux de freinage (14, 16) par coulée.

4. Disque de frein selon une quelconque des revendications précédentes, dans lequel l'ouverture centrale est limités par des cannelures présentant la forme de nervures (22) et de rainures (24).
